(19) Europäisches Patentamt

European Patent Office

Office européen des brevets

(11) **EP 1 641 151 A1**

(12) **EUROPEAN PATENT APPLICATION**

(43) Date of publication:
**29.03.2006 Bulletin 2006/13**

(51) Int Cl.:
***H04B 10/155*** (2006.01)

(21) Application number: **04292294.8**

(22) Date of filing: **23.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **ALCATEL**
**75008 Paris (FR)**

(72) Inventor: **Bissessur, Hans**
**75014 Paris (FR)**

(74) Representative: **Rausch, Gabriele et al**
**Alcatel**
**Intellectual Property Group,**
**Stuttgart**
**70430 Stuttgart (DE)**

(54) **Method and device for generating a four-level optical signal**

(57) It is proposed to apply the following steps of using two-level electrical coded signals to drive two optical modulators thereby generating two different two-level optical coded signals and coupling at a coupler these two different two-level optical coded signals together to obtain a four-level optical signal. This can be achieved advantageously by using an optical device according to the invention which comprises two optical modulators driven by two-level electrical coded signals generating each a specific two-level optical coded signal. That optical device comprises furthermore a coupler connected to the two optical modulators for coupling the two-level optical coded signals to obtain the required four-level optical signal.

FIG.2a

## Description

Technical Field

The present invention relates to a method for generating a four-level optical signal by using two-level electrical coded signals. Furthermore, it relates to an optical device for generating that four-level optical signal comprising optical source producing a light to be transmitted to optical modulator driven by the two-level electrical coded signal.

Background of the invention

In the information age, the demand for data networks of higher and higher capacities, at lower and lower costs is constantly increasing. This demand is fuelled by many different factors, such as the tremendous growth of the Internet and the World Wide Web. The increasing numbers of on-line users of the Internet and the World Wide Web have greatly increased the demand for bandwidth because of the proliferation of bandwidth-intensive applications such as audio and video streaming and file transfer.

Optical fiber transmission has played a key role in increasing the bandwidth of telecommunications networks. Optical fiber offers much higher bandwidths than copper cables and is much less susceptible to various types of electromagnetic interference and other undesirable effects. As a result, it is the preferred medium for transmission of data at high data rates and over long distances.

At very high data rates, chromatic dispersion in optical fiber transmission lines causes waveform deterioration and becomes a limiting factor in standard single-mode optical fiber. Although dispersion-shifted optical fiber exists, which exhibits very low dispersion at optical fiber transmission wavelengths, there is a large installed base of standard signal-mode optical fiber. Thus, there is a great demand for dispersion tolerant data transmission systems.

Today, optical systems use mostly two-level intensity modulation for optical transmission. However, multi-level modulation can be interesting for short-distance transmission. Indeed, they reduce the required signal bandwidth, therefore reducing the waveform deterioration caused by chromatic dispersion or other linear effects. For the same information rate, they require less electrical bandwidth , for example, for 40 Gb/s information rate, the binary signal needs about 40 GHz bandwidth, whereas the four-level signal reduces the bandwidth to 20 GHz.
A multi-level signal can be generated at the electrical level and then applied to an electro-optic modulator. Such a modulator can be conceived in an integrated way when coupled with a laser like a distributed feedback (DFB) laser. Alternately, a LiNbO$_3$ modulator could be used. It is known that a multi-level signal is difficult to generate with similar extinction ratio as a two-level signal. For example, if 10 dB optical extinction is desired with a four-level system, i.e. the optical power/intensity levels are defined at 0.1, 1, 10 and 100, a modulator extinction ratio of 30 dB is required.. With a modulator extinction ratio of 14 dB an extinction ratio of 4.7 dB is achievable. Thus, achievable levels are below 6 dB. Despite such a drawback, the advantage of multi-level coding requiring lower electrical bandwidth than two-level coding at the same information rate is interesting with respect to chromatic dispersion or polarisation mode dispersion.

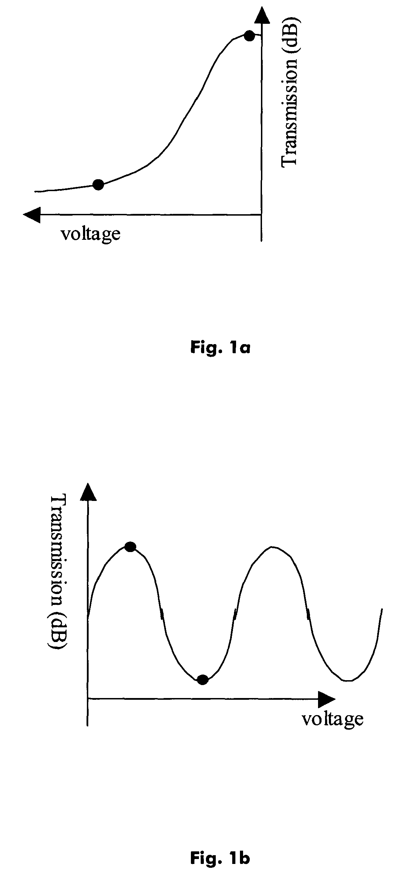

But, the multi-level electrical signal generation is more complicated than for two-level signal for which a simple decision flip-flop can be used to reshape the electrical signal. Moreover, with a Mach-Zehnder modulator (shortened to MZM hereinbelow) or an electroabsorption modulator (shortened to EAM hereinbelow) the two-level signal benefits from the non-linear (sinus-like) properties of the electro-optic response (transmission). Any small variation of the electric voltage around the extrema values respectively for the state "1" or "0" will have no influence at the intensity. On the contrary, when generating a multi-level optical signal, all the intermediate levels operate in the linear region and do not benefit from such saturation effect. All this implies that for a multi-level optical signal the levels are not so stable. On figure 1a and 1 b is shown schematically the transmission respectively of an EAM and of a MZM. The dots indicate the bias points for a two-level system. Typically, for a four-level system, the bias points would be in the intermediate range i.e. linear part and would not benefit from the "saturation effect".

In US 6623188 is described an optical data transmitter including a precoder that converts an input data signal to a binary precoded data signal and to a complementary binary precoded data signal. A delay element delays one of the complementary binary precoded data signal and the binary precoded data signal relative to the other by a time corresponding to less than one bit period of the binary precoded data signal. A differential amplifier converts the binary precoded data signal and the complementary binary precoded data signal to a four-level electrical data signal and to a complementary four-level electrical data signal. An optical data modulator modulates an amplitude of an optical signal applied to an optical input of the optical data modulator in response to at least one of the four-level electrical data signal and the complementary four-level electrical data signal to generate a modulated optical output signal. The four-level optical level is thus generated from a four-level electrical signal.

In case of binary modulation (two-level electronic signal), the initial electrical signal applied to the electrical input of the optical data modulator must be modulated at the final bit rates. This appears to be a big restriction when moving to very high bit rates like 40 Gb/s. Indeed, if direct modulation of the laser is to be used, the lasers in such a context are distributed feedback DFB laser which show a resonance frequency. Since the resonance frequency of such DFB lasers increases with the output power, they need to be modulated at high power in order to achieve high bit-rate operation. As a direct consequence, the extinction ratio is insatisfactory since too small, and it is better to use external modulators (EAM or MZM).

Summary of the invention

In view of the above, it is an object of the present invention to provide a method and an optical device for generating four-level optical signal without being limited by the properties of the required modulating devices (laser source or external modulator) particularly at high bit rates and being still an interesting solution from the point of view of the costs.

This object is achieved in accordance with the invention by applying the following steps of using two-level electrical coded signals to drive two optical modulators, thereby generating two different two-level optical coded signals, and coupling at an optical coupler these two different two-level optical coded signals together to obtain a four-level optical signal. This can be achieved advantageously by using an optical device according to the invention which comprises two optical modulators driven by two-level electrical coded signals generating each a specific two-level optical coded signal. That optical device comprises furthermore a coupler connected to the two optical modulators for coupling the two-level optical coded signals to obtain the required four-level optical signal.

According to an embodiment of the invention, the two-level optical coded signals to be coupled are generated coherently such that their amplitudes is added at the coupler to obtain the four-level optical signal. Alternately, the two different two-level coded signals are generated incoherently such that their intensities are added at the coupler to obtain the four-level optical signal.

In both embodiments the coupling ratio of the couplers, as well as the power of the optical signals are adjusted in order to obtain a good extinction ratio of the four-level optical signal.

Advantageous developments of the invention are described in the dependent claims, the following description and the drawings.

Description of the drawings

An exemplary embodiment of the invention will now be explained further with the reference to the attached drawings in which:

Fig. 1 a, 1 b    are two schematic description of the transmission of a respectively EAM and MZ; the dots represent the transmission points for the "0" and "1" levels

Fig. 2a, 2b    are schematic architecture of an optical device according to the invention with respectively two laser sources or a single one; DATA1 and DATA2 are the binary electrical data streams.

Fig. 2c    shows different eye diagrams with two time-misaligned (left figure) and time-aligned (right figure) signals.

Fig. 3    shows an alternative schematic diagram of a configuration to generate four-level optical signal according to the invention.

Detailed description of preferred embodiments

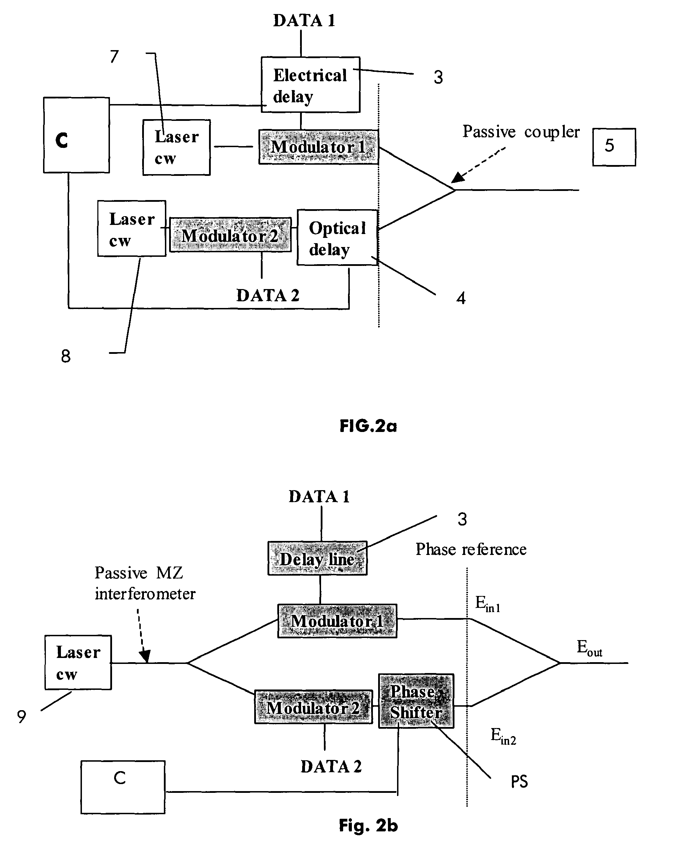

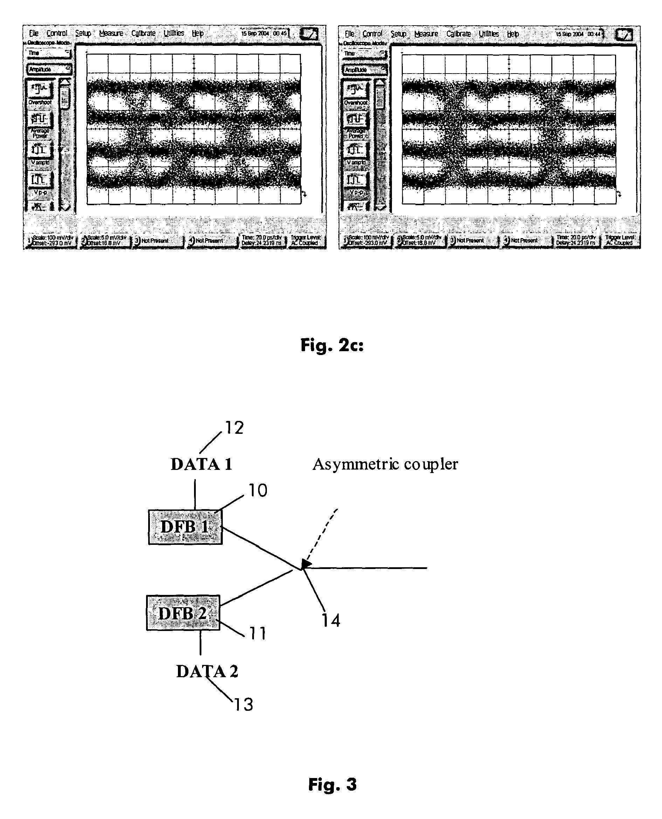

On figure 2a and 2b are described two alternative architectures of an optical device according to the invention. The optical device according to figure 2a comprises two optical modulators 1 and 2 each driven by a two-level electrical coded signal DATA 1 and DATA 2. One of the electrical signals (here DATA 1) is passing an electrical delay line 3 before entering the modulator 1. The inputs of the modulators 1 and 2 are connected with respective laser sources 7, 8. The laser sources 7 and 8 are continous wave sources. The outputs of the modulators 1 and 2 are connected to the respective two inputs of a passive coupler 5. The output of modulator 1 is connected directly and the output of modulator 2 via an optical delay line 4. Both delay lines, the electrical delay line 3 and the optical delay line 4 are connected to a control circuit C. The control circuit controls the delay times of either electrical signal DATA 1 and the modulated optical output signal of modulator 2. In practice, one delay element is sufficient when the two lasers are sufficiently separated in wavelength. The delay elements 3 and 4 ensure that the rising and falling instants of the optical signals occur at the same time after combination in the passive coupler for optimal detection. It is also preferable that DATA1 and DATA2 are driven at exactly the same bit-rate (e.g., they share the same electrical clock) Fig. 2 c (left figure) show the measured optical eye when the signals of the two arms are shifted in time, i.e., when the delay is not adjusted. The result is not good enough to have a good system performance. The right site of Fig. 2 c shows a signal when the two optical signals of the two modulators are aligned and the resulting optical eye is open.

To get the requested results the use of either an electrical delay line in one branch of the data stream is used, or an optical delay line in the optical branch before recombination of the optical signals is used, or both delay lines. The electrical delay can be achieved with different embodiments, the electrical signal can be delayed by a control circuit C and applied to the modulators in a respective way. Alternatively, the delays can also be adjusted during the assembly of the transmitter, by carefully choosing the lengths of the electrical cables and the optical cables after the coupler.

When two lasers with different wavelengths are used, with sufficient spacing between the wavelengths (typically, when their frequencies are spaced by more than three times the bit-rate), the two optical signals do not beat with each other, and their intensities add at the output of the coupler. When the wavelengths of the two lasers are closer (or when only one laser is used, like in Fig. 2b), beating occurs at the receiver. Since the beating depends on the polarisation, the optical couplers then must maintain the polarisation; the resulting signal has to be analysed in terms of amplitude (not intensity), as will be shown below.

the embodiment according to figure 2b shows two optical modulators 1 and 2 each driven by two-level electrical coded signals DATA 1 and DATA 2. The inputs of the modulators 1 and 2 are connected with respective a single optical source 9. The laser sources 9 is a continous wave source connected with an interferometer 15 like a passive MZ to launch the optical signal into the modulators 1, 2, and then combine them on a single fiber. The passive MZ interferometer 15 can include asymmetric MMIs (Multi-Mode Interferometers) in order to adjust the splitting ratio, or an attenuator on one of the arm. The outputs of the modulators 1 and 2 are connected to the respective two inputs of a passive coupler 5. The output of modulator 1 is connected directly and the output of modulator 2 via an optical delay line 4. The modulators on figure 2a and 2b can be MZs or EAMs. Such an optical device can be realized as a planar light wave circuit with discrete modulators, or with fibers and discrete modulators, or integrated directly in LiNbO$_3$. In the case that the modulators are polarisation-dependent, polarisation maintaining components or fibres must be used. In the following, we shall only refer to couplers without specifying their technology (they can be fused fibre couplers, or waveguide couplers, or waveguide couplers with MMIs). The important parameter is their splitting ratio: we shall refer to 70/30 couplers as being couplers with a splitting ratioof 70% on one arm and 30% on the other arm. Thus 50/50 couplers represent the usual "3 dB couplers".

On figure 2b, the light from the centre wavelength laser is separated over two paths, with independent modulation by two data streams. For example, if DATA1 and DATA2 are at 20 Gb/s, the resulting coding will give a 40 Gb/s rate. Each optical modulator 1, 2 codes the optical signal on a two level basis. Since the light over the two paths is coherent (two laser source 7, 8 at the same wavelength - figure 2a - or a single light source - figure 2b -) the signals and couplers have to be defined in terms of amplitude.

For a 50/50 coupler, the output amplitude is given as a function of the amplitudes of the two inputs of that coupler by the following formula:

$$E_{out} = (\ (1-j)^*E_{in1} + (1+j)^*E_{in2}\ )/2$$

Where j is the imaginary constant (j ^ 2 = -1).

There is actually also a constant phase term, which is neglected here. In the following examples, we assume the same laser source; then, amplitudes add, and care has to be taken of the amplitude response of the coupler, with the imaginary terms. The optical intensity/power is defined as the square module of the amplitude

$$I = P = |E|^2$$

In the following examples, we assume that the waves from the 2 modulators are in phase at the "phase reference" plane in the absence of electrical DATA signal (or when the modulator is unchirped). This is achieved by properly adjusting the length of the interferometer arms after the two modulators, or by adjusting an optical delay line. Let's assume for example, that modulator 1 codes the data on levels 0.04 and 1 in intensity, (an extinction ratio of 14 dB in intensity), i.e., 0.2 and 1 in amplitude and modulator 2 codes the signals on levels 0.2 and 0.8 in amplitude (an extinction ratio of 12 dB in intensity). Furthermore, we assume that the modulators are unchirped, and the path lengths in the 2 arms of the Mach-Zehnder interferometer are the same. The output signal is then coded on 4 different levels in amplitude: 0.2, 0.5+0.3j, 0.6-0.4j, and 0.9-0.1 j, or in other words 0.04, 0.34, 0.52, and 0.82 in intensity. This gives an extinction ratio of about 2 dB between the two upper levels of 0.52 and 0.82. The difference in amplitude between the two modulators can also be obtained by using an attenuator on one arm of the interferometer, or with an unbalanced coupler. This is about the best extinction ratio that can be obtained with unchirped modulators and a balanced interferometer (2 arms of the same length).

In order to improve the extinction ratio with unchirped modulators, a phase shift can be included in the interferometer arms. For example, there is a phase shift of Pi/2 in arm 2, if modulator 1 codes the signals on levels 0.2 and 1 in amplitude, and modulator 2 codes the signals on levels 0.2 and 0.65 in amplitude, this leads to a better separation between levels: 0.08, 0.36, 0.72, 1.36 in intensity, i.e., an extinction ratio of almost 3 dB. The electrical delay line has to be tuned as well, in order for the optical signals to be synchronous in their rise and fall times and to obtain an open eye.

In order to further improve the extinction ratio, it is advantageous to use a chirped modulator. For example, if modulator 1 is chirped, resulting in DATA1 being coded on 2 amplitude levels 0.2 and 0.8j, DATA 2 on (0.1j, 0.5) in amplitude gives a better separation between levels. This gives 0.05-0.05j, 0.35+0.15j, 0.35+0.45j, and 0.65+0.65j in amplitude or 0.005, 0.145, 0.325, 0.845 (in intensity), i.e., an extinction ratio of about 4 dB.

Figure 3 shows another embodiment according to the invention. In that implementation of the multi-level generation two incoherent sources 10, 11 are used. In this case, the two lasers have different wavelengths. After being modulated by the respective two-level electrical coded signals 12, 13 the generated two different two-level optical coded signals will be added by the coupler 14. Due to the incoherence of these two two-level optical coded signals, it is the intensity which will be added at the coupler 14. Such a scheme can be used for "black and white" transmission, i.e. without optical filters at the receiver. In that case, the photodiode at the receiving side detects only a multi-level signal. At the example shown on figure 3 it is chosen to modulate directly the distributed feedback DFB lasers. These can be replaced by DFB lasers with an external modulator (EAM or LiNbO$_3$ like), like in Fig. 2a.

When two DFBs with different frequencies are used, their intensities add at the output of the coupler. For example, for modulation at 20Gsymbols/s with 4 level signals (40Gb/s) if the wavelengths are spaced by 0.4 nm, the resulting signal can be detected with a wide filter and considered as a multilevel signal, although it is actually located around 2 different wavelengths. This option can be interesting for coarse WDM or so-called "black-and white" transmission.

Like for the signals in Fig. 2a and 2b, there are three possible ways to generate the four level signal:

- either use a symmetric coupler, and operate the modulating devices (lasers in case of direct modulation, or modulators)at different intensity (power) levels
- or use an asymmetric coupler, and operate the modulating devices at the same intensity (power) levels.
- or use an asymmetric coupler and operate the modulating devices at different intensity (power) levels

The examples below are given in the case of two lasers at different frequencies (Fig. 3). For example, using a symmetric 50/50 coupler: (incoherent addition, two DFBs at different wavelengths), DFB 1 is modulated between the 0 and 1 (intensity) levels, and DFB 2 between 0 and 0.5 levels; the resulting 4 levels are 0, 0.5, 1, and 1.5, which gives an extinction ratio of 1.8 dB (between the two upper levels). When modulating DFB2 between 0 and 0.62, the resulting 4 levels are 0, 0.62, 1, 1.62, which gives an extinction ratio of 2.1 dB.

Another example, using an asymmetric 70/30 coupler: (incoherent addition, DFBs at different wavelengths), DFB 1 is modulated between the 0 and 1 levels, and DFB 2 between 0 and 1 levels too; DFB1 is on the 70% branch and DFB2 on the 30% one. The resulting 4 levels are 0, 0.3, 0.7, and 1, which gives an extinction ratio of 1.5 dB (between the two upper levels). If we want to equalize the extinction ratios between the levels, we can choose a 62/38 coupler, which gives levels of 0, 0.38, 0.62, and 1 and an extinction ratio of 2.1 dB between the upper levels.

**Claims**

1. A method for generating a four-level optical signal by using two-level electrical coded signals (DATA 1, DATA2), the method being **characterised by** driving two optical modulators (modulator 1, modulator2) with two-level electrical coded signals (DATA 1, DATA2) thereby generating two different two-level optical coded signals and combining the two different two-level optical coded signals to the resulting four level optical signal.

2. The method according to claim 1 **characterised by** generating the two different two-level optical coded signals coherently and adding at the coupler their amplitudes thereby obtaining the four-level optical signal.

3. The method according to claim 1 **characterised by** applying a phase shift between the two different two-level optical amplitude coded signals.

4. The method according to claim 1 **characterised by** using one of the two optical modulators to be chirped.

5. The method according to claim 1 **characterised by** generating the two different two-level optical coded signals incoherently and adding at the coupler their intensities thereby obtaining the four-level optical signal.

6. The optical device according to claim 6 **characterised in that** the coupler is unbalanced

7. An optical device for generating a four-level optical signal comprising optical source (7, 8, 9) providing light to be modulated by applying a two-level electrical coded signal (DATA 1,DATA2) **characterised in, that** the optical device comprises two optical modulators (1, 2 ) in two branches driven by two-level electrical coded signals (DATA 1,DATA2), where the optical outputs of the modulators (1, 2) are combined via a coupler (5) and by means (3,4, PS) to apply a delay between the two branches of the device before combining the optical output signals.

8. The optical device according to claim 6 **characterised in that** the light to be transmitted to the two optical modulators have same wavelength to generate two different two-level optical coded signals coherently to add at the coupler their amplitudes to obtain the four-level optical signal.

9. The optical device according to claim 7 **characterised in that** the coupler is defined by two different arms connected to each optical modulators introducing a phase shift between the two different two-level optical amplitude coded signals.

10. The optical device according to claim 6 **characterised in that** the light to be transmitted to the two optical modulators to generate two-level optical coded signals incoherently to add their intensity at the coupler to obtain the four-level optical signal.

11. The optical device according to claim 6 **characterised in that** the used coupler is unbalanced.

12. The optical device according to claim 6, where lasers are directly modulated by electrical signals ( DATA1 and DATA2).

Fig. 1a

Fig. 1b

DATA 1

Electrical
delay

3

7

C

Laser
cw

Modulator 1

Passive coupler

5

Laser
cw

Modulator 2

Optical
delay

DATA 2

4

8

**FIG.2a**

DATA 1

3

Delay line

Phase reference

Passive MZ
interferometer

Modulator 1

$E_{in1}$

$E_{out}$

Laser
cw

9

Modulator 2

Phase
Shifter

$E_{in2}$

DATA 2

PS

C

**Fig. 2b**

EP 1 641 151 A1

**Fig. 2c:**

12

DATA 1                    Asymmetric coupler

10

DFB 1

14

DFB 2

11

DATA 2

13

**Fig. 3**

9

**European Patent Office**

# EUROPEAN SEARCH REPORT

**Application Number**

EP 04 29 2294

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/123122 A1 (NAKAMURA TAKUYA ET AL) 3 July 2003 (2003-07-03) <br> * figures 1,3,4 * <br> * paragraph [0048] * <br> * paragraphs [0067] - [0069] * <br> * paragraph [0073] * <br> * paragraph [0092] * <br> * paragraph [0111] * | 1-3,6-9, 11 | H04B10/155 |
| A | | 4,5,10, 12 | |
| | ----- | | |
| X | PATENT ABSTRACTS OF JAPAN <br> vol. 012, no. 207 (E-621), <br> 14 June 1988 (1988-06-14) <br> & JP 63 005633 A (NEC CORP), <br> 11 January 1988 (1988-01-11) <br> * abstract; figure 1 * | 1,5,7, 10,12 | |
| A | | 2-4,6,8, 9,11 | |
| | ----- | | |
| X | WO 02/17517 A (MARCONI CASWELL LIMITED; GRIFFIN, ROBERT) <br> 28 February 2002 (2002-02-28) <br> * figures 1,4 * <br> * page 3, lines 1-6 * <br> * page 3, lines 18-21 * <br> * page 4, paragraph 11-18 * <br> * page 5, line 16 - page 6, line 24 * <br> * page 9, lines 11-14 * | 1-3,6-9, 11 | TECHNICAL FIELDS SEARCHED (Int.Cl.7) <br><br> H04B |
| A | | 4,5,10, 12 | |
| | ----- | | |

The present search report has been drawn up for all claims

| Place of search | Date of completion of the search | Examiner |
|---|---|---|
| Munich | 4 February 2005 | Petitit, N |

EPO FORM 1503 03.82 (P04C01)

**ANNEX TO THE EUROPEAN SEARCH REPORT
ON EUROPEAN PATENT APPLICATION NO.**

EP 04 29 2294

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2005

| Patent document cited in search report | | Publication date | Patent family member(s) | | Publication date |
|---|---|---|---|---|---|
| US 2003123122 | A1 | 03-07-2003 | JP | 2003258733 A | 12-09-2003 |
| JP 63005633 | A | 11-01-1988 | NONE | | |
| WO 0217517 | A | 28-02-2002 | AU | 7996701 A | 04-03-2002 |
| | | | CA | 2419920 A1 | 28-02-2002 |
| | | | EP | 1310053 A1 | 14-05-2003 |
| | | | WO | 0217517 A1 | 28-02-2002 |
| | | | GB | 2366106 A ,B | 27-02-2002 |
| | | | US | 2004021829 A1 | 05-02-2004 |

EPO FORM P0459

For more details about this annex : see Official Journal of the European Patent Office, No. 12/82